# FASCICULE DE BREVET EUROPEEN

(11) **EP 1 294 821 B1**
(45) Date de publication et mention de la délivrance du brevet: **24.03.2004**
(21) Numéro de dépôt: 01940681.8
(22) Date de dépôt: 05.06.2001
(51) Int. Cl.: C09K 7/06, C08G 65/26, C08G 65/329, B01F 17/22

(54) **FLUIDE DE PUITS A BASE D'HUILE COMPRENANT UN SYSTEME EMULSIFIANT STABLE EN TEMPERATURE ET NON POLLUANT**
ÖL-BASIERTE BOHRFLÜSSIGKEIT ENTHALTEND EINES TEMPERATURSTABILES UMWELTFREUNDLICHES EMULGIERUNGSSYSTEM
OIL-BASED DRILLING FLUID COMPRISING A TEMPERATURE-STABLE AND NON-POLLUTING EMULSIFYING SYSTEM

(30) Priorité: 06.06.2000 FR 0007198
(43) Date de publication de la demande: 26.03.2003
(73) Titulaire: Institut Français du Pétrole, 92852 Rueil-Malmaison Cedex (FR); RHODIA CHIMIE, 92512 Boulogne Billancourt Cedex (FR)
(72) Inventeur: DALMAZZONE, Christine, F-78000 Versailles (FR); AUDIBERT-HAYET, Annie, F-78290 Croissy sur Seine (FR); LANGLOIS, Bruno, F-91700 Sainte Geneviève des Bois (FR); TOUZET, Sylvie, F-92160 Antony (FR)
(86) Numéro de dépôt international: PCT/FR2001/001722
(87) Numéro de publication internationale: WO 2001/094495

(56) Documents cités:
- EP-A- 0 561 607
- EP-A- 0 561 608
- FR-A- 2 040 092
- FR-A- 2 316 326
- FR-A- 2 798 387

## Description

La présente invention concerne l'utilisation d'un système émulsifiant non toxique capable de stabiliser une émulsion eau-dans-huile, même à des températures élevées, pour la formulation de fluides de puits à base d'huile utilisables en conditions de forage HP/HT (haute pression / haute température), c'est-à-dire jusqu'à environ 200°C.

Lorsque l'on fore un puits, et plus particulièrement un puits de pétrole, on est contraint d'utiliser un fluide de puits, en particulier un fluide de forage, dit également « boue de forage », pour transporter les déblais générés par le forage jusqu'à la surface. Ce fluide de puits doit en outre permettre le refroidissement et la lubrification de l'outil, maintenir les parois du puits, exercer une contre-pression suffisante et, enfin, éviter l'endommagement de la formation.

On utilise principalement deux types de fluides de puits : les fluides à base d'eau ou « boues à l'eau » et ceux à base d'huile ou « boues à l'huile ». Les boues à l'eau sont beaucoup plus économiques et écologiques que les boues à l'huile, mais ces dernières présentent des avantages opérationnels évidents, notamment dans le cas du forage de puits très profonds (HP/HT) : bonne réduction des frottements, fluide inerte vis-à-vis des roches de la formation et en particulier des argiles, faible endommagement de la zone de production, etc.

Typiquement, les boues à l'huile sont des émulsions eau-dans-huile, contenant de 5 à 40 % en volume d'une phase aqueuse saline dispersée. Ces émulsions inverses comprennent principalement trois types de composés :
- des émulsifiants pour assurer la stabilité de l'émulsion ;
- des argiles organophiles pour contrôler les propriétés rhéologiques, et plus particulièrement la thixotropie ;
- des agents alourdissants, comme le sulfate de baryum (ou barytine), pour ajuster la densité du fluide.

Deux problèmes importants se posent concernant l'utilisation des boues à l'huile pour les forages très profonds :
- un problème de stabilité en température des émulsions : les émulsifiants assurant la stabilité des émulsions doivent en effet maintenir les gouttelettes d'eau en émulsion jusqu'à des températures voisines de 200°C. Si l'émulsion se sépare par coalescence des gouttelettes d'eau, le fluide perd ses propriétés rhéologiques et, surtout, risque d'endommager gravement la formation ;
- un problème d'ordre environnemental, les émulsifiants employés devant non seulement être efficaces, mais également le moins toxique possible.

D'une manière générale, en passant des systèmes traditionnels à base d'huiles riches en aromatiques de type diesel à des formulations à base d'huiles moins nocives pour l'environnement, les boues sont devenues moins stables en température. Ceci peut être dû à la stabilité en température de l'huile utilisée, telle que les esters végétaux, ou au système émulsifiant qui ne permet pas une stabilité de l'émulsion aux plus hautes températures. La limite se situe vers 150°C, ce qui entraîne souvent des problèmes de contrôle de filtrat aux températures élevées. Cette perte de propriétés est à l'origine de problèmes d'endommagement des réservoirs (infiltration d'eau) et de pertes importantes de productivité du puits foré avec ces fluides.

Selon la présente invention, on propose l'utilisation dans des fluides de puits d'un système émulsifiant qui assure la stabilité de la boue à l'huile jusqu'à environ 200°C et qui, de plus, présente une toxicité réduite.

L'émulsifiant principal consiste en au moins un superamide alcoxylé, polyalcoxylé ou non alcoxylé, tel que décrit dans la demande de brevet français FR-A-2 798 387 au nom de RHODIA CHIMIE, publiée le 16 mars 2001.

Par le terme « superamides », on désigne d'une façon générale la famille des alcanolamides obtenus par transamidification par au moins une alcanolamine d'au moins un ester d'acide gras et de monoalcool ou d'une huile d'origine végétale ou animale (triglycéride). Il existe des alcanolamides obtenus par amidification d'un acide gras. Ils sont cependant obtenus sous forme d'un mélange comprenant l'amide, l'amine, l'acide gras, et de l'eau. Typiquement, dans ces alcanolamides, la concentration en amide est égale à 60-65 % en poids. Par contre, dans le cas des superamides, le mélange final contient en général plus de 90 % en poids d'amide, ce qui constitue un avantage évident. En effet, lors de la synthèse du superamide, l'alcool provenant de l'ester d'acide gras mis en oeuvre est distillé pendant le cours de la réaction, rendant cette dernière complète. Ainsi, les superamides fabriqués selon le procédé décrit dans la demande de brevet précitée contiennent un minimum d'amines résiduelles et sont donc moins toxiques que les amides équivalents fabriqués selon les procédés classiques connus de l'homme du métier.

Ainsi, l'invention propose un fluide de puits à base d'huile, stable en température, non éco-toxique et particulièrement adapté au forage haute pression / haute température, comprenant une phase aqueuse dispersée dans une phase continue non miscible et caractérisé en ce qu'il comprend un système émulsifiant comprenant lui-même au moins un superamide alcoxylé, polyalcoxylé ou non alcoxylé comprenant une proportion supérieure à 90 % d'au moins un composé répondant à l'une des formules générales :

[R¹-CON(R²)-CH₂CHR³-O-(CHR⁴-CHR⁵O)ₘ-(CH₂CH₂O)ₙ]ₚX (I)

R¹-CON-[CH₂CHR³-O-(CHR⁴-CHR⁵O)ₘ-(CH₂CH₂O)ₙX]₂ (II)

dans lesquelles
- R¹ représente un radical hydrocarboné, en particulier aliphatique, en C₇-C₃₀, préférentiellement en C₁₀-C₂₂, linéaire ou ramifié, saturé ou non, éventuellement porteur d'au moins un groupement hydroxyle ;
- R² représente un atome d'hydrogène ou un radical hydrocarboné en C₁-C₄ ;
- R³ représente un atome d'hydrogène ou un radical hydrocarboné en C₁-C₄ ;
- R⁴ et R⁵, identiques ou non, représentent un atome d'hydrogène ou un radical alkyle comprenant 1 ou 2 atomes de carbone, à la condition que l'un au plus de ces deux radicaux soit un atome d'hydrogène ;
- X représente un atome d'hydrogène, un radical hydrocarboné en C₁-C₆, un groupement phosphate, carboxylate, sulfate ou sulfonate ;
- m est un nombre moyen compris entre 0 inclus et 20 ;
- n est un nombre moyen compris entre 0 inclus et 50 ; et
- p vaut 1 ou 2, selon la nature de X.

Le cas où n = 0 et m = 0 est un cas particulier de l'invention. Les superamides correspondants ne sont pas des superamides polyalcoxylés.

Le radical R¹ est plus particulièrement un radical hydrocarboné, linéaire ou ramifié, saturé ou non, en C₁₀-C₂₂, dérivant d'un acide gras saturé ou insaturé, éventuellement porteur d'au moins un groupement hydroxyle. De préférence, ledit radical comporte au moins une insaturation éthylénique.

Comme exemples d'acides gras saturés en C₁₀-C₂₂, on peut citer entre autres les acides laurique, caprique, décanoïque, stéarique, isostéarique, gadoléique et myristique. En tant qu'acides gras en C₁₀-C₂₂ porteurs d'au moins une insaturation éthylénique, on peut citer, sans intention de s'y limiter, les acides lindérique, myristoléique, palmitoléique, oléique, pétrosélénique, doeglique, érucique, linoléique, linolénique, isanique, stéarodonique, arachidonique, chypanodonique et ricinoléique. Parmi les acides précités, le radical R¹ dérive plus particulièrement d'acides gras choisis parmi les acides palmitoléique, oléique, pétrosélénique, érucique, linoléique, linolénique et ricinoléique.

Les radicaux R² et R³, identiques ou non, représentent chacun un atome d'hydrogène ou un radical hydrocarboné en C₁-C₄, qui est plus particulièrement saturé. De préférence, les radicaux R² et R³ représentent chacun un atome d'hydrogène, un radical méthyle, éthyle, propyle ou isopropyle, butyle ou isobutyle.

Les radicaux R⁴ et R⁵ sont préférentiellement choisis chacun parmi l'hydrogène ou le radical méthyle, à la condition que l'un d'entre eux, mais non les deux simultanément, représente un atome d'hydrogène. Ainsi, selon ce mode de réalisation préféré, le motif correspondant dérive de l'oxyde de propylène.

Comme déjà indiqué plus haut, m, qui représente un nombre moyen, varie entre 0 inclus et 20. De même, n, qui représente un nombre moyen, varie entre 0 inclus et 50.

Les composés selon la présente invention se trouvent préférentiellement sous forme non-ionique. Le radical X représente alors un atome d'hydrogène ou un radical hydrocarboné en C₁-C₆. Dans un tel cas, la valeur du coefficient p est de 1.

Comme indiqué plus haut, les superamides utilisés dans l'invention sont obtenus par transamidification d'un ester d'acide gras et de monoalcool ou d'une huile d'origine végétale ou animale (triglycéride), au moyen d'une alcanolamine telle que la monoéthanolamine ou la diéthanolamine. L'emploi des superamides dérivant de la diéthanolamine, éventuellement alcoxylés ou polyalcoxylés et répondent à la formule (II) mentionnée plus haut, peut être avantageux selon l'invention.

A titre d'exemples d'huiles d'origine végétale, on peut mentionner, entre autres, les huiles de colza, de tournesol, d'arachide, d'olive, de noix, de maïs, de soja, de lin, de chanvre, de pépins de raisin, de coprah, de palme, de graines de coton, de babassu, de jojoba, de sésame, de ricin et de coriandre. L'huile de colza est préférée.

Comme huiles d'origine animale, on peut citer entre autres les huiles de cachalot, de dauphin, de baleine, de phoque, de sardine, de hareng, de squale, de foie de morue, de pied de boeuf ainsi que les graisses de boeuf, de porc, de cheval et de mouton (suifs).

Enfin, les superamides peuvent être obtenus à partir de produits (esters d'acides gras et de monoalcools) résultant de réactions d'alcoolyse, plus précisément de méthanolyse, des huiles précitées. Ces produits sont alors des esters d'alkyles, plus précisément des esters de méthyle, formés sur les mélanges d'acides gras contenus dans ces huiles.

La pureté des amides utilisés dans les systèmes émulsifiants mis en jeu dans les fluides de puits de l'invention (plus de 90 % en poids) leur confère, par comparaison avec des amides de moindre pureté, par exemple ayant des teneurs en amides purs de l'ordre de 60-65 %, des propriétés améliorées, non seulement du point de vue de la toxicité, mais aussi du point de vue de la stabilité des émulsions.

Dans la préparation des fluides de puits à base d'huile selon l'invention, la phase continue ou phase huile peut contenir tout type d'huile de base utilisée communément pour former ce type de fluide: par exemple du gazole, du pétrole brut, de l'essence, du kérosène ou, comme il est maintenant recommandé pour des raisons de protection de l'environnement, des coupes hydrocarbures de faible toxicité, comme les oléfines (Ultidrill® de DOWELL SCHLUMBERGER) ou des coupes de n-alcanes (XP07® de BAROID ou EDC 95-11® de Total Solvants), dont la principale caractéristique est de ne pas contenir ou de contenir très peu d'hydrocarbures aromatiques, principaux responsables de la forte toxicité des huiles de base classiques.

La concentration en huile de base peut être comprise entre 60 et 95 %, de préférence entre 70 et 90 % en volume. La quantité d'eau utilisée pour la fabrication de tels fluides se situe entre 5 et 40 %, de préférence entre 10 et 30 %, en volume de fluide. Cette phase aqueuse peut être de l'eau douce, de l'eau salée type eau de mer ou une saumure. La présence de fortes concentrations en NaCl, CaCl₂, CaCO₃ ou CaSO₄ n'a pas d'effet négatif sur la stabilité de l'émulsion produite, l'agent émulsifiant étant non-ionique, donc peu sensible à la présence de sels.

Dans les fluides de puits de l'invention, les superamides peuvent se trouver seuls ou en mélanges.

L'émulsifiant principal tel que défini ci-dessus est utilisé de préférence avec un co-tensioactif, de préférence non-ionique, tel que par exemple un acide gras, un acide dicarboxylique ou un carboxylate. A titre d'exemple, on peut citer les acides gras du tall-oil.

La composition exacte du fluide de puits dépend de l'application particulière à laquelle est destiné ce fluide. Cependant, dans la plupart des cas, des concentrations en émulsifiants allant de 10 à 30 % en volume par rapport à la phase aqueuse seront suffisantes pour obtenir des résultats satisfaisants. Le co-tensioactif peut représenter par exemple d'environ 40 à 90 % en poids du système émulsifiant.

Le fluide peut contenir de 5 à 25 % en poids de chaux, de 1 à 15 % en poids d'argile traitée organophile (telle que la bentone) et au moins un agent alourdissant tel que le sulfate de baryum (ou barytine), en une quantité suffisante pour atteindre une densité d'environ 2,4. Il peut contenir en outre jusqu'à environ 10 % en poids de réducteur de filtrat. Il est encore possible d'ajouter un glycol, par exemple de l'éthylèneglycol, un polyglycol, du glycérol ou un polyglycérol par exemple en une proportion de 5 à 40 % en poids par rapport au système émulsifiant.

Le fluide de puits ainsi préparé peut être utilisé pour le forage, la complétion ou le "workover" d'un puits, en le faisant circuler en quantité suffisante pour obtenir les résultats recherchés.

La stabilité des émulsions et des fluides de puits (notamment des boues de forage) selon l'invention peut être testée de différentes manières : tests de stabilité en éprouvettes dits également « bottle tests » sur émulsions primaires à différentes températures ; tests API de stabilité électrique sur boues complètes avant et après vieillissement ; et tests de filtration HP/HT avant et après vieillissement. Des mesures calorimétriques réalisées en DSC avant et après vieillissement réalisées sur des boues complètes permettent également de quantifier l'influence du vieillissement en température sur la taille des gouttes de l'émulsion.

Les exemples suivants illustrent l'invention sans en limiter la portée. Sauf indication contraire, les pourcentages sont donnés en poids.

Dans ces exemples, on a utilisé les systèmes émulsifiants définis ci-dessous :
- TA1 : système commercial : Interdrill Emul HT® et Interdrill LORM® (88 %-12 % en poids) utilisé à titre de comparaison.
- TA2 (selon l'invention) : mélange de 35 % en poids de superamide SA1 et 65 % en poids d'acide gras. Le superamide SA1 résulte de la réaction d'une mole d'huile de colza avec 2,5 moles de diéthanolamine. L'acide gras est un acide gras de tall-oil vendu sous la marque Résinoline BD2® par la société DRT-GRANEL. Il contient notamment de 48 à 55 % en poids d'acide oléique et de 30 à 40 % en poids d'acide linoléique, avec une teneur maximale en acides palmitique et stéarique de 3 % en poids et une teneur maximale en acide linolénique de à 2 % en poids.
- TA3 (selon l'invention) : mélange de 50 % en poids de superamide SA2 et 50 % en poids d'acide gras (Résinoline BD2®). Le superamide SA2 résulte de la réaction d'une mole d'ester méthylique de colza avec 1 mole de monoéthanolamine.
- TA4 (selon l'invention) : mélange de 20 % en poids de superamide SA3 et 80 % en poids d'acide gras (Résinoline BD2®). Le superamide SA3 résulte de la réaction d'une mole d'ester méthylique de colza à haut taux d'acide érucique (C₂₂) avec 1 mole de monoéthanolamine.
- TA5 (selon l'invention) : mélange de 50 % en poids de superamide SA4 et 50 % en poids d'acide gras (Résinoline BD2®). Le superamide SA4 résulte de la réaction d'une mole d'ester méthylique de colza à haut taux d'acide érucique avec 1 mole de monoéthanolamine, suivie de la réaction de l'amide formée (SA3) avec 1 mole d'oxyde de propylène.
- TA6 (selon l'invention) : mélange de 20 % en poids de superamide SA3 défini plus haut et 80 % en poids d'acide gras (Résinoline BD2®). Ce mélange est additionné de 25 % en poids, par rapport à l'émulsifiant, de glycérol, optimisé pour la forte teneur en solides des formulations.
- TA7 (selon l'invention) : mélange de 50 % en poids de superamide SA3 défini plus haut et 50 % en poids d'acide gras (Résinoline BD2®). Ce mélange est additionné de 16 % en poids, par rapport à l'émulsifiant, de glycérol, optimisé pour la forte teneur en solides des formulations.
- TA8 (selon l'invention) : mélange de 50 % en poids de superamide SA1 défini plus haut et 50 % en poids d'acide gras (Résinoline BD2®). Ce mélange est additionné de 16 % en poids, par rapport à l'émulsifiant, de glycérol, optimisé pour la forte teneur en solides des formulations.

### Exemple 1 : Test de stabilité en éprouvettes ou « bottle tests » sur les émulsions primaires

Les émulsifiants ont d'abord été évalués sur des systèmes simplifiés ou émulsions primaires, par rapport à un système émulsifiant du commerce (Interdrill Emul HT® et Interdrill LORM® de DOWELL-SCHLUMBERGER).

Formulation :
- Huile de base : huile minérale Ultidrill®
- Saumure : eau à 20 % en poids de CaCl₂
- Systèmes émulsifiants utilisés : TA1, TA2, TA3 et TA5.

On a fait varier la quantité totale d'émulsifiants de 3 à 15 % en poids par rapport au volume de saumure.

Les émulsifiants sont solubilisés dans 56 ml d'huile et mélangés pendant 2 min à 7200 trs/min avec un mélangeur Silverson. La saumure (14 ml) et la chaux (1,4 g de Ca(OH)₂) sont ajoutées sous mélange et l'agitation est maintenue pendant 15 min à 7200 trs/min. Les 70 ml de mélange sont ensuite versés dans une éprouvette graduée de 100 ml. La stabilité de l'émulsion est observée après 2 heures et après 24 heures.

Les résultats, exprimés en pourcentage de phase émulsionnée par rapport au volume initial, sont rassemblés dans le tableau ci dessous.

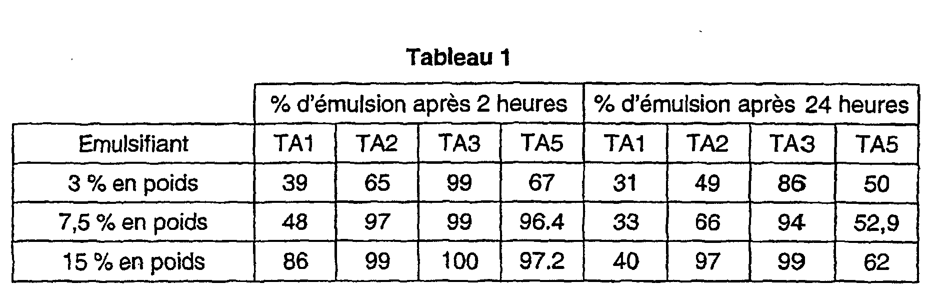

On constate que les systèmes émulsifiants selon l'invention permettent d'obtenir une stabilité de l'émulsion primaire beaucoup plus importante que le système comparatif. La formulation comprenant le système émulsifiant TA3 selon l'invention donne les meilleurs résultats.

### Exemple 2 : Test de stabilité en éprouvettes ou « bottle tests » sur les émulsions primaires

L'effet du vieillissement des émulsions en température à pression atmosphérique entre 20 et 70°C a également été regardé sur plusieurs systèmes émulsifiants.

Formulation :
- Huile de base : huile minérale Ultidrill® (H1) ou EDC 95-11® (H2)
- Saumure : eau à 20 % en poids de CaCl₂
- Systèmes émulsifiants utilisés : TA1, TA3 et TA4.
Les résultats sont rassemblés dans le tableau ci dessous.

**Tableau 2**

| Huile | H1 | | | H2 | | |
|---|---|---|---|---|---|---|
| Système émulsifiant | TA1 | TA3 | TA4 | TA1 | TA3 | TA4 |
| Stabilité à 20°C | < 30' | > 96 h | > 96 h | < 30' | > 96 h | > 96 h |
| Stabilité à 50°C | < 30' | > 1 h | > 18 h | < 30' | > 1 h | > 23 h |
| Stabilité à 70°C | < 30' | < 30' | > 30' | < 30' | < 1 h | > 3 h |

On constate encore que les systèmes émulsifiants selon l'invention permettent une plus grande stabilité de l'émulsion avec la température.

### Exemple 3 : stabilité des boues complètes

Différents systèmes émulsifiants ont été comparés en formulation complète. Le mélange des différents composants est effectué avec un mélangeur Hamilton Beach et l'émulsion est réalisée au mélangeur Silverson muni d'une grille émulsionneuse.

On verse 288 ml d'huile de base dans un bol d'Hamilton Beach et on ajoute sous mélange à faible vitesse 14 g de système émulsifiant, 3 g de réducteur de filtrat (Versatrol ou Truflo 100) et 12,5 g de chaux Ca(OH)₂, vitesse « low speed » pendant 5 min. On ajoute ensuite 7 g d'argile traitée organophile (« bentone 38 ») et on poursuit le mélange pendant 5 min, vitesse « low speed ». 74 ml de saumure comprenant 20 g de CaCl₂ pour 100 g d'eau distillée sont ajoutés progressivement et l'agitation est maintenue pendant 10 min (« low speed »). 452g de barytine (alourdissant) sont ensuite ajoutés progressivement et le mélange est agité à vitesse moyenne (position « medium speed ») pendant 20 min. L'étape finale de fabrication de la boue est réalisée avec un appareil Silverson L4RT, avec l'équipement standard muni d'une grille émulsionneuse. Le mélange est agité à 6600 trs/min pendant 10 minutes.

Le fluide de puits est ensuite évalué avant et après vieillissement pendant 16 heures à 180°C, suivant les tests API de rhéologie et de stabilité électrique (norme API 13B-2) et de filtration statique HP/HT. Le test de filtration statique est réalisé avec une différence de pression de 35 bars et à une température de 180°C.

Une détermination importante est celle de la quantité et de la qualité du filtrat avant et après vieillissement de la boue. Il faut en effet que le filtrat recueilli soit exempt d'eau. Si la présence d'eau libre ou d'émulsion est détectée, cela signifie que l'émulsion a cassé pendant le processus de filtration.

Dans les boues considérées dans une première série de déterminations, l'huile de base était l'huile minérale Ultidrill® (H1) et les systèmes émulsifiants utilisés étaient TA1, TA3, TA4 et TA5.

Les résultats sont rassemblés dans le tableau ci dessous.

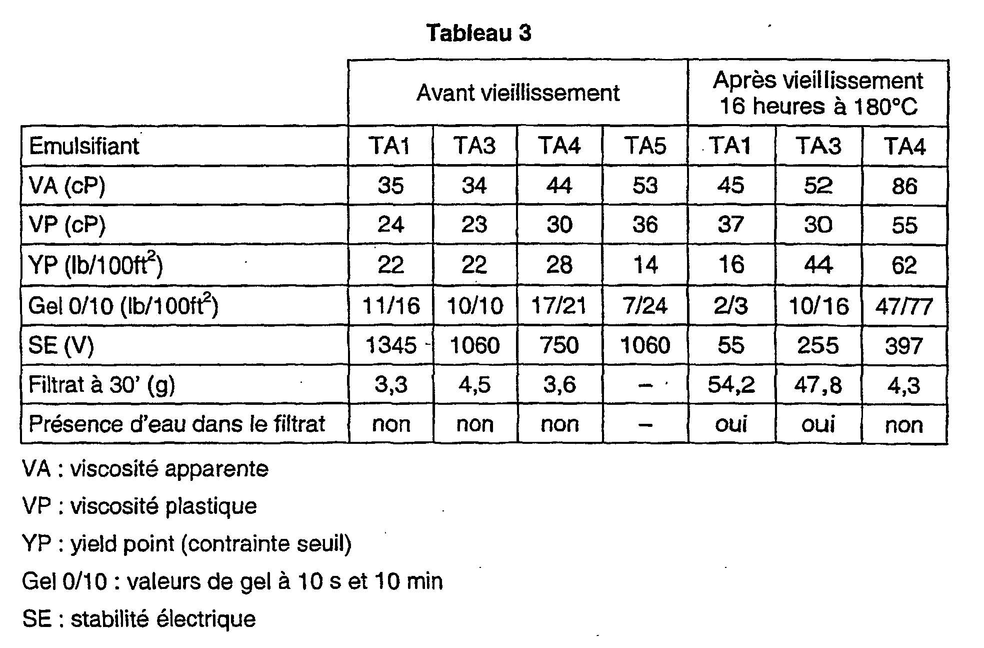

On constate que dans le cas de la formulation comparative (TA1), la stabilité électrique s'effondre après l'étape de vieillissement à 180°C et les résultats de filtration sont mauvais (présence d'eau dans le filtrat). Dans le cas des systèmes selon l'invention, la chute de stabilité électrique est beaucoup moins brutale, et les résultats de filtration sont meilleurs, voire excellents avec le système TA4.

On a effectué les mêmes déterminations que précédemment sur des boues complètes ayant la même composition, mais dans lesquelles l'huile minérale Ultidrill® a été remplacée par l'huile minérale EDC 95-11® (H2).

Dans les boues considérées dans cette deuxième série, les systèmes émulsifiants utilisés étaient TA1, TA4, TA6, TA7 et TA8.

Les résultats sont rassemblés dans le tableau ci après.

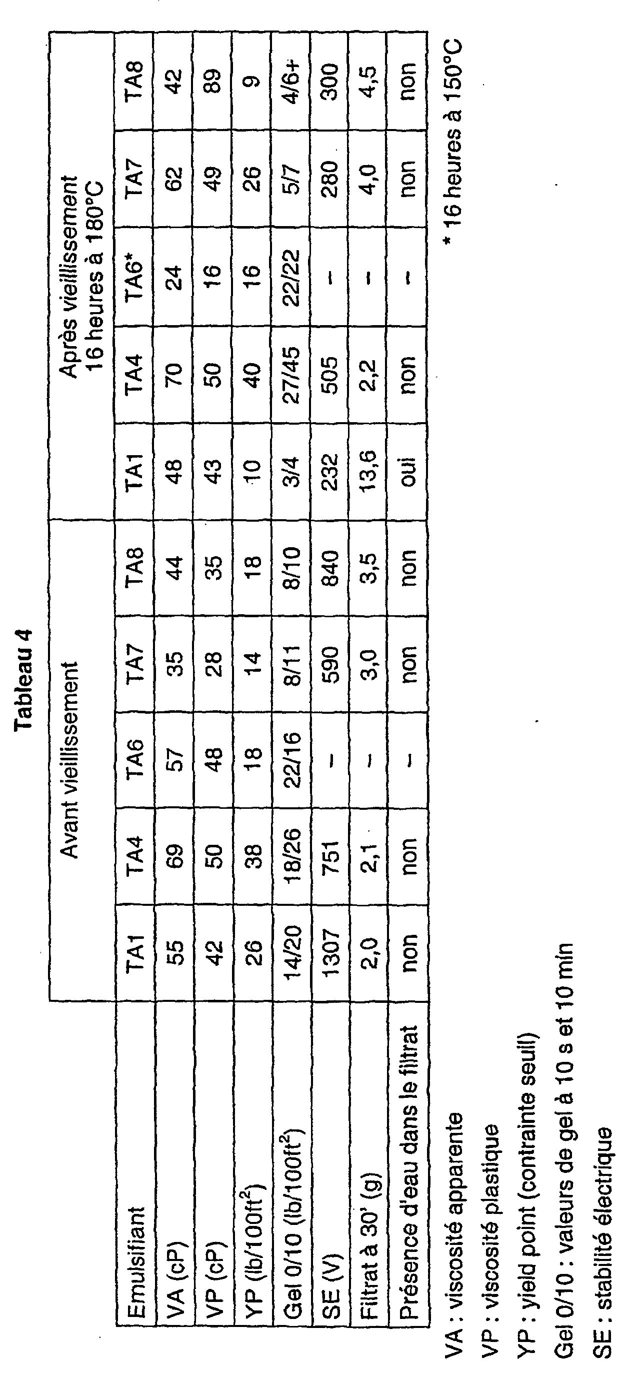

Avec l'huile de base H2, on constate encore que la stabilité de l'émulsion fabriquée avec les systèmes selon l'invention est très supérieure à celle fabriquée à l'aide du système comparatif (TA1).

### Exemple 4 : étude DSC

On a montré par une technique d'analyse calorimétrique DSC que la taille des gouttes d'eau contenues dans la boue complète fabriquée avec les superamides était moins affectée par le vieillissement à 180°C. Il est en effet très difficile de mesurer la taille des gouttelettes d'eau dans une boue à l'huile, à cause principalement de la quantité importante de solides contenus dans ce type de fluide. La DSC permet d'analyser un échantillon de boue complète, sans le diluer. On fait subir à cet échantillon un refroidissement jusqu'à observer la cristallisation des gouttelettes d'eau. Plus la température de cristallisation observée est basse, plus les gouttes sont petites (Clausse, D., « Research Techniques Utilizing Emulsions ». In *Encyclopedia of Emulsion Technology*, Becher, P., Ed. Dekker : New-York, 1985; Vol. 2, p 77.)

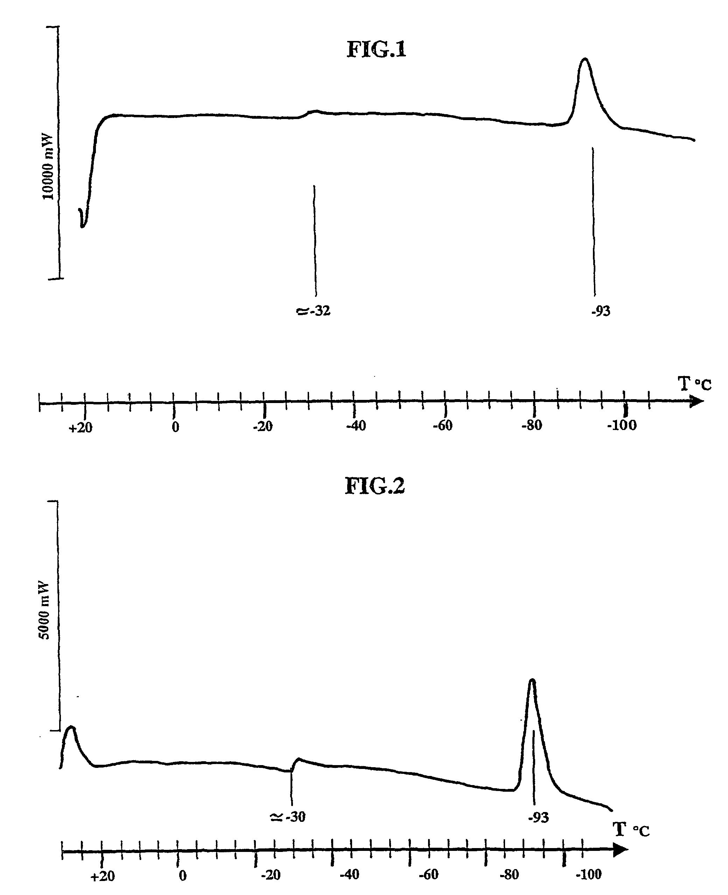

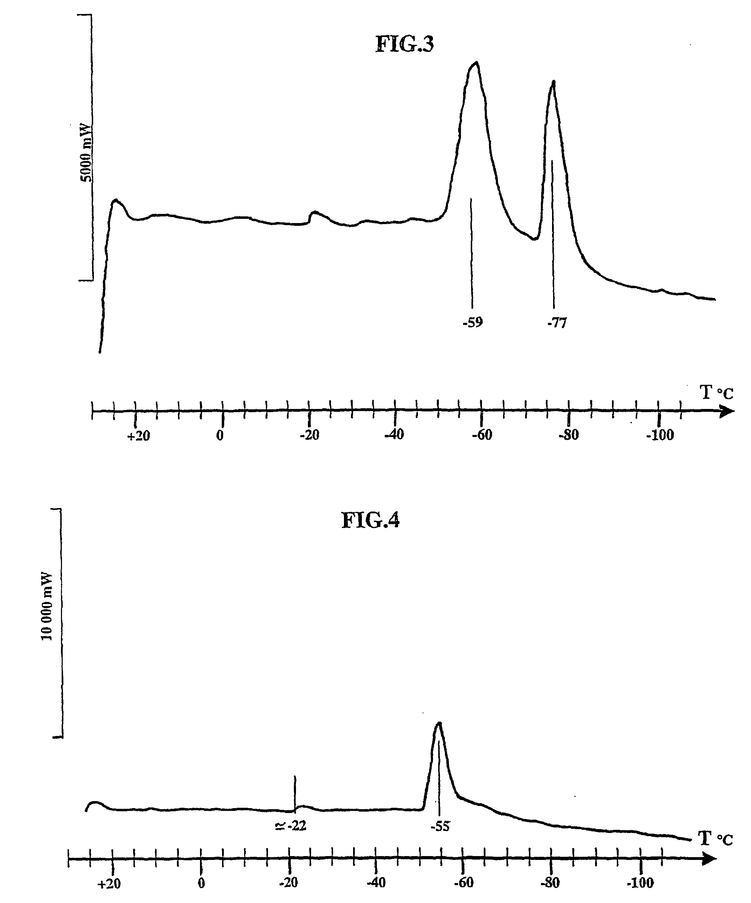

On a comparé deux boues formées avec l'huile de base H2, l'une fabriquée avec le système émulsifiant commercial TA1 et l'autre, avec le système de l'invention TA4. Ces deux boues ont été étudiées par DSC avant vieillissement (figures 1 et 2) et après vieillissement pendant 16 heures à 180°C (figures 3 et 4). On s'aperçoit en comparant les deux types de boue avant vieillissement (BHR), que leur température de cristallisation est semblable (environ -93°C). On peut donc penser qu'après une fabrication à température ambiante, les deux boues possèdent une population de gouttelettes d'eau de taille comparable, donc une stabilité comparable. Lors des analyses des boues après vieillissement (AHR), on se rend compte que ce n'est plus le cas. Pour les boues à base de TA1, la température de cristallisation est désormais de l'ordre de -55°C. Une coalescence des gouttes s'est donc produite. La stabilité de la boue au bout de 16 heures n'est donc plus très bonne. Par contre, pour les boues à base de TA4, les résultats après vieillissement sont bien meilleurs. On note la présence de deux pics de cristallisation. On est donc en présence de gouttelettes de tailles différentes. Le premier pic se situe vers - 59°C, le second autour de -77°C, ce qui indique que la taille moyenne des gouttelettes d'eau de la boue fabriquée avec TA4 est très inférieure à la taille moyenne des gouttelettes d'eau de la boue fabriquée avec TA1. La stabilité de la boue fabriquée avec le système selon l'invention est donc meilleure après vieillissement que celle du système comparatif.

### Exemple 5 : toxicité et biodégradabilité d'un système utilisé dans l'invention

L'étude a été menée par un laboratoire indépendant norvégien NIVA, spécialisé dans l'évaluation de la toxicité des fluides à base d'huile utilisés en Mer du Nord.

Ces tests ont concerné la biodégradabilité en eau de mer et la toxicité.

Le test de biodégradabilité en eau de mer a été conduit sur l'émulsifiant superamide SA3, selon le protocole standard OECD 306 (« Closed Bottle Test »). On a obtenu une biodégradabilité de 65 % (62,6 - 66,4 %), ce qui constitue un résultat plus qu'acceptable

La toxicité a été suivie avec une formulation contenant 125 ml d'huile Ultidrill®, 125 ml de saumure à 20 % en poids de CaCl₂, 12,5 g de Ca(OH)₂, 6,5 g d'émulsifiant constitué de 1,25 g de SA3 et de 5 g d'acide gras du tall-oil (Résinoline BD2®), et 0,42 g de glycérol, sur trois espèces présentes en Mer du Nord.

On a mené un test d'inhibition de la croissance d'algue marine sur *Skeletonema costatum*, selon la norme ISO 10253 et un test de toxicité aiguë sur *Arcactia tonsa* et sur *Corophium Volutator* selon le protocole ISO/FDIS 14669.

Les résultats sont donnés dans le tableau ci-dessous.

**Tableau 5**

| Espèce | *Skeletonema costatum* | *Arcatia tonsa* | *Corophium Volutator* |
|---|---|---|---|
| | ErC₅₀ = 2900 mg/l (*) | LC₅₀ > 10 000 mg/l (**) | LC₅₀ = 2056 mg/l (**) |

Les résultats donnés ici montrent la bonne biodégradabilité et l'absence de toxicité des produits utilisés.

## Revendications

1. Fluide de puits à base d'huile, stable en température, non éco-toxique et particulièrement adapté au forage haute pression / haute température comprenant une phase aqueuse dispersée dans une phase continue non-miscible, **caractérisé en ce qu'**il comprend un système émulsifiant comprenant au moins un superamide alcoxylé, polyalcoxylé ou non alcoxylé comprenant une proportion supérieure à 90 % d'au moins un composé répondant à l'une des formules générales :
[R¹-CON(R²)-CH₂CHR³-O-(CHR⁴-CHR⁵O)ₘ-(CH₂CH₂O)ₙ]ₚX (I)
R¹-CON-[CH₂CHR³-O-(CHR⁴-CHR⁵O)ₘ-(CH₂CH₂O)ₙX]₂ (II)
dans lesquelles
- R¹ représente un radical hydrocarboné en C₇-C₃₀, linéaire ou ramifié, saturé ou non, éventuellement porteur d'au moins un groupement hydroxyle ;
- R² représente un atome d'hydrogène ou un radical hydrocarboné en C₁-C₄ ;
- R³ représente un atome d'hydrogène ou un radical hydrocarboné en C₁-C₄ ;
- R⁴ et R^{5,} identiques ou non, représentent un atome d'hydrogène ou un radical alkyle comprenant 1 ou 2 atomes de carbone, à la condition que l'un au plus de ces deux radicaux soit un atome d'hydrogène ;
- X représente un atome d'hydrogène, un radical hydrocarboné en C₁-C₆, un groupement phosphate, carboxylate, sulfate ou sulfonate ;
- m est un nombre moyen compris entre 0 inclus et 20 ;
- n est un nombre moyen compris entre 0 inclus et 50 ; et
- p vaut 1 ou 2, selon la nature de X.

2. Fluide de puits selon la revendication 1 **caractérisé en ce que** dans la formule du superamide, R¹ est un radical hydrocarboné en C₁₀-C₂₂.

3. Fluide de puits selon la revendication 1 et 2 **caractérisé en ce que**, dans la formule du superamide, n est égal à 0 et m est égal à 0.

4. Fluide de puits selon l'une des revendications 1 à 3 **caractérisé en ce que** le superamide est obtenu par transamidification d'un ester d'acide gras et de monoalcool ou d'une huile d'origine végétale ou animale, au moyen d'une alcanolamine.

5. Fluide de puits selon la revendication 4 **caractérisé en ce que** l'alcanolamine est choisie parmi la monoéthanolamine et la diéthanolamine.

6. Fluide de puits selon la revendication 4 **caractérisé en ce que** l'alcanolamine est la monoéthanolamine.

7. Fluide de puits selon la revendication 4 **caractérisé en ce que** l'alcanolamine est la diéthanolamine.

8. Fluide de puits selon l'une des revendications 1 à 7 dans lequel la quantité de phase aqueuse représente de 5 à 40 % en volume et la quantité de phase continue représente de 60 à 95 % en volume.

9. Fluide de puits selon la revendication 8 dans lequel la quantité de phase aqueuse représente de 10 à 30 % en volume et la quantité de phase continue représente de 70 à 90 % en volume.

10. Fluide de puits selon l'une des revendications 1 à 9 **caractérisé en ce que** ladite phase aqueuse est choisie parmi l'eau douce, l'eau de mer et les saumures ladite phase continue est constituée d'une huile de base choisie parmi les gazoles, les pétroles bruts, les essences, les kérosènes, les coupes d'hydrocarbures oléfiniques et les coupes de n-alcanes.

11. Fluide de puits selon l'une des revendications 1 à 10 **caractérisé en ce que** le système émulsifiant est à une concentration de 10 à 30 % en volume par rapport à la phase aqueuse.

12. Fluide de puits selon l'une des revendications 1 à 11 **caractérisé en ce que** le système émulsifiant comprend en outre au moins un agent co-tensioactif non ionique.

13. Fluide de puits selon la revendication 12 **caractérisé en ce que** ledit agent co-tensioactif non ionique est choisi parmi les acides gras, les acides dicarboxyliques et les carboxylates.

14. Fluide de puits selon l'une des revendications 12 et 13 **caractérisé en ce que** le système émulsifiant comprend de 10 à 60 % en poids de superamide et de 40 à 90 % en poids d'agent co-tensioactif non-ionique.

15. Fluide de puits selon l'une des revendications 1 à 14 **caractérisé en ce qu'**il contient de 5 à 25 % en poids de chaux, de 1 à 15 % en poids d'argile traitée organophile, au moins un agent alourdissant en une quantité suffisante pour atteindre une densité d'environ 2,4 et jusqu'à 10 % en poids de réducteur de filtrat.

16. Fluide de puits selon l'une des revendications 1 à 15 **caractérisé en ce qu'**il contient en outre de 5 à 40 % en poids par rapport au système émulsifiant d'au moins un produit choisi parmi les glycols, les polyglycols, le glycérol et les polyglycérols.

17. Méthode de mise en oeuvre d'un fluide de puits dans une opération de forage, de complétion ou de "workover" d'un puits, qui comprend la mise en circulation dans ledit puits d'un fluide de puits selon l'une des revendications 1 à 16.

## Patentansprüche

1. Bohrfluid auf Ölbasis, das temperaturstabil, nicht ökologisch toxisch und besonders zum Bohren bei hohem Druck / hoher Temperatur ausgelegt ist, umfassend eine wässrige, in einer kontinuierlichen nicht mischbaren Phase dispergierte Phase, **dadurch gekennzeichnet, dass** es ein emulgierendes System umfasst, das wenigstens ein alkoxyliertes, polyalkoxyliertes oder nicht alkoxyliertes Superamid umfasst, das einen Anteil von über 90% von wenigstens einer Verbindung umfasst, die einer der folgenden allgemeinen Formeln entspricht:
[R¹-CON(R²)-CH₂CHR³-O-(CHR⁴-CHR⁵O)ₘ-(CH₂CH₂O)ₙ]ₚX (I)
R¹-CON-[CH₂CHR³-O-(CHR⁴-CHR⁵O)ₘ-(CH₂CH₂O)ₙX]₂ (II)
in denen
- R¹ ein linearer oder verzweigter, ggf. gesättigter C₇-C₃₀-Kohlenwasserstoffrest ist, der ggf. Träger von wenigstens einer Hydroxygruppe ist;
- R² ein Wasserstoffatom oder einen C₁-C₄-Kohlenwasserstoffrest darstellt;
- R³ ein Wasserstoffatom oder einen C₁-C₄-Kohlenwasserstoffrest darstellt;
- R⁴ und R⁵ ggf. identisch ein Wasserstoffatom oder ein Alkylrest darstellen, der 1 oder 2 Kohlenstoffatome umfasst, mit der Bedingung, dass maximal der eine dieser beiden Reste ein Wasserstoffatom ist;
- X ein Wasserstoffatom, ein C₁-C₆-Kohlenwasserstoffrest, eine Phosphat-, Carboxylat-, Sulfat- oder Sulfonatgruppe darstellt;
- m eine durchschnittliche Zahl zwischen einschließlich 0 und 20 ist;
- n eine durchschnittliche Zahl zwischen einschließlich 0 und 50 ist; und
- p 1 oder 2 gemäß der Natur von X beträgt;

2. Bohrfluid nach Anspruch 1, **dadurch gekennzeichnet, dass** in der Formel des Superamids R¹ ein C₁₀-C₂₂-Kohlenwasserstoffrest ist.

3. Bohrfluid nach Anspruch 1 und 2, **dadurch gekennzeichnet, dass** in der Formel des Superamids n gleich 0 ist und m gleich 0 ist.

4. Bohrfluid nach einem der Ansprüche 1 bis 3, **dadurch gekennzeichnet, dass** das Superamid durch Transamidifizieren eines Fettsäureesters und von Monoalkohol oder eines Öls pflanzlichen oder tierischen Ursprungs mittels eines Alkanolamins erhalten wird.

5. Bohrfluid nach Anspruch 4, **dadurch gekennzeichnet, dass** das Alkanolamin unter Monoethanolamin und Diethanolamin gewählt ist.

6. Bohrfluid nach Anspruch 4, **dadurch gekennzeichnet, dass** das Alkanolamin Monoethanolamin ist.

7. Bohrfluid nach Anspruch 4, **dadurch gekennzeichnet, dass** das Alkanolamin Diethanolamin ist.

8. Bohrfluid nach einem der Ansprüche 1 bis 7, in dem die Menge an wässriger Phase 5 bis 40 Vol.-% und die Menge an kontinuierlicher Phase 60 bis 95 Vol.-% darstellt.

9. Bohrfluid nach Anspruch 8, in dem die Menge an wässriger Phase 10 bis 30 Vol.-% und die Menge an kontinuierlicher Phase 70 bis 90 Vol.-% darstellt.

10. Bohrfluid nach einem der Ansprüche 1 bis 9, **dadurch gekennzeichnet, dass** die wässrige Phase unter weichem Wasser, Meerwasser und Salzlaken gewählt ist, die kontinuierliche Phase aus einem Grundöl, gewählt unter Dieselölen, Rohölen, Benzinen, Kerosinen, olefinischen Kohlenwasserstofffraktionen und n-Alkanfraktionen, besteht.

11. Bohrfluid nach einem der Ansprüche 1 bis 10, **dadurch gekennzeichnet, dass** das emulgierende System bei einer Konzentration von 10 bis 30 Vol.-% im Verhältnis zur wässrigen Phase vorliegt.

12. Bohrfluid nach einem der Ansprüche 1 bis 11, **dadurch gekennzeichnet, dass** das emulgierende System außerdem wenigstens ein nicht-ionisches co-tensioaktives Reagenz umfasst.

13. Bohrfluid nach Anspruch 12, **dadurch gekennzeichnet, dass** das nicht-ionische co-tensioaktive Reagenz gewählt ist unter den Fettsäuren, den Dicarboxylsäuren und den Carboxylaten.

14. Bohrfluid nach einem der Ansprüche 12 und 13, **dadurch gekennzeichnet, dass** das emulgierende System 10 bis 60 Gew.-% Superamid und 40 bis 90 Gew.-% nicht-ionisches co-tensioaktives Reagenz umfasst.

15. Bohrfluid nach einem der Ansprüche 1 bis 14, **dadurch gekennzeichnet, dass** es 5 bis 25 Gew.% Kalk, 1 bis 15 Gew.-% organophilen, behandelten Ton, wenigstens ein beschwerendes Reagenz in ausreichender Menge, um eine Dichte von etwa 2,4 zu erreichen, und bis zu 10 Gew.-% an Filtratreduktionsmittel enthält.

16. Bohrfluid nach einem der Ansprüche 1 bis 15, **dadurch gekennzeichnet, dass** es außerdem 5 bis 40 Gew.% im Verhältnis zum emulgiereden System von wenigstens einem Produkt enthält, das unter den Glykolen, den Polyglykolen, Glycerin und den Polyglycerinen gewählt ist.

17. Verfahren zum Einsatz eines Bohrfluids in einem Vorgang zum Bohren, zur Vervollständigung oder "workover" eines Bohrlochs, das das In-Zirkulation-Setzen von einem Bohrfluid nach einem der Ansprüche 1 bis 16 in dem Bohrloch umfasst.

## Claims

1. An oil-based well fluid that is temperature-stable, non-toxic to the environment and particularly suitable for high pressure/high temperature drilling, comprising an aqueous phase dispersed in a non-miscible continuous phase, **characterized in that** it comprises an emulsification system comprising at least one alkoxylated, polyalkoxylated or non-alkoxylated superamide comprising more than 90% by weight of amide with one of the following general formulae:
[R¹-CON(R²)-CH₂CHR³-O-(CHR⁴-CHR⁵O)ₘ-(CH₂CH₂O)ₙ]ₚX (I)
R¹-CON-[CH₂CHR³-O-(CHR⁴-CHR⁵O)ₘ-(CH₂CH₂O)ₙX]₂ (II)
where
• R¹ represents a linear or branched, saturated or unsaturated C₇-C₃₀ hydrocarbon radical, optionally carrying at least one hydroxyl group;
• R² represents a hydrogen atom or a C₁-C₄ hydrocarbon radical;
• R³ represents a hydrogen atom or a C₁-C₄ hydrocarbon radical;
• R⁴ and R⁵, which may be identical or different, represent a hydrogen atom or an alkyl radical containing 1 or 2 carbon atoms, provided that at most one of said two radicals is a hydrogen atom;
• X represents a hydrogen atom, a C₁-C₆ hydrocarbon radical, a phosphate, carboxylate, sulphate or sulphonate group;
• m is an average number in the range 0 (included) to 20;
• n is an average number in the range 0 (included) to 50; and
• p is 1 or 2 depending on the nature of X.

2. A well fluid according to claim 1 **characterized in that** in the formula for the superamide, R¹ is a C₁₀-C₂₂ hydrocarbon radical.

3. A well fluid according to claim 1 or 2 **characterized in that** in the formula for the superamide, n equals 0 and m equals 0.

4. A well fluid according to any one of claims 1 to 3 **characterized in that** the superamide is obtained by transamidification of an ester of a fatty acid and a mono-alcohol or of an oil of plant or animal origin, by means of an alkanolamine.

5. A well fluid according to claim 4 **characterized in that** the alkanolamine is monoethanolamine or diethanolamine.

6. A well fluid according to claim 4 **characterized in that** the alkanolamine is monoethanolamine.

7. A well fluid according to claim 4 **characterized in that** the alkanolamine is diethanolamine.

8. A well fluid according to any one of claims 1 to 7 in which the quantity of aqueous phase represents 5% to 40% by volume and the quantity of continuous phase represents 60% to 95% by volume.

9. A well fluid according to claim 8 in which the quantity of aqueous phase represents 10% to 30% by volume and the quantity of continuous phase represents 70% to 90% by volume.

10. A well fluid according to any one of claims 1 to 9 **characterized in that** said aqueous phase is selected from fresh water, sea water and brine, and said continuous phase is constituted by a base oil selected from gas oils, crude oils, gasolines, kerosines, olefinic hydrocarbon cuts and n-alkane cuts.

11. A well fluid according to any one of claims 1 to 10 **characterized in that** the emulsification system is at a concentration of 10% to 30% by weight with respect to the aqueous phase.

12. A well fluid according to any one of claims 1 to 11 **characterized in that** the emulsification system also comprises at least one non-ionic co-surfactant.

13. A well fluid according to claim 12 **characterized in that** said non-ionic co-surfactant is selected from fatty acids, dicarboxylic acids and carboxylates.

14. A well fluid according to any one of claims 12 and 13 **characterized in that** the emulsification system comprises 10% to 60% by weight of superamide and 40% to 90% by weight of non-ionic co-surfactant.

15. A well fluid according to any one of claims 1 to 14 **characterized in that** it contains 5% to 25% by weight of lime, 5% to 15% by weight of organophilic treated clay, at least one weighting material in a quantity sufficient to produce a density of about 2.4, and up to 10% by weight of fluid loss control agent.

16. A well fluid according to any one of claims 1 to 15 **characterized in that** it also contains 5% to 40% by weight of at least one product selected from glycols, polyglycols, glycerol and polyglycerols.

17. A method for using a well fluid in a well drilling, completion or workover operation, comprising circulating a well fluid according to any one of claims 1 to 16 in said well.
